# EUROPEAN PATENT SPECIFICATION

(11) **EP 3 868 209 B1**
(45) Date of publication and mention of the grant of the patent: **26.07.2023**
(21) Application number: 21156250.9
(22) Date of filing: 10.02.2021
(51) Int. Cl.: A21C 1/02, A21C 1/14, B01F 27/2322, B01F 27/85, B01F 27/96, B01F 35/212, B01F 35/221

(54) **KNEADING MACHINE AND METHOD FOR PREPARING DOUGH**
KNETMASCHINE UND VERFAHREN ZUR HERSTELLUNG VON TEIG
MACHINE À PÉTRIR ET PROCÉDÉ DE PRODUCTION DE PÂTE

(30) Priority: 19.02.2020 IT 202000003413
(43) Date of publication of application: 25.08.2021
(73) Proprietor: SANCASSIANO S.p.A., I-12060 Roddi d'Alba (Cuneo) (IT)
(72) Inventor: DROCCO, Mr. Davide, I-12060 Roddi d'Alba (Cuneo) (IT)
(74) Representative: Frontoni, Stefano

(56) References cited:
- EP-A1- 2 269 802
- EP-A1- 3 450 007
- US-A- 3 656 718

## Description

The present invention relates to a kneading machine, in particular for preparing doughs for oven-baked products, of the type comprising:
- a first kneading tool and a second kneading tool, which turn about respective axes of rotation; and
- a system for driving said kneading tools, configured to drive said first and second tools according to a pre-set phase difference between said first and second tools, for execution of a kneading action.

In the solutions according to the prior art, the system for driving the kneading tools comprises an electric motor common to the two tools, which is connected thereto through motion-transmission means of various types, such as belts, gears, etc.

In the above known solutions, setting of the phase difference between the two kneading tools is defined by the configuration and arrangement given to the kinematic chain that transmits the motion from the electric motor to the two kneading tools. This configuration of phase difference between the tools cannot be modified except by intervening on the aforesaid kinematic chain.

In a kneading machine according to the prior art, the operating parameters can be adjusted on the basis of the type of preparation required as regards the velocity of rotation of the tools and the duration of the kneading process.

EP2269802A1, which discloses a kneading machine in accordance with the preamble of claim 1, and EP3450007A1 disclose prior art representing certain technical background.

In this context, the object of the present invention is to provide a kneading machine that will be improved as compared to the solutions according to the prior art, and, in particular, that will be able to carry out a preparation of the dough that can be adapted to the requirements of the specific applications.

The above object is achieved via a kneading machine that presents the characteristics recalled in Claim 1. The present invention moreover regards a method for preparing a dough according to Claim 8.

The claims form an integral part of the teaching provided herein.

Further characteristics and advantages of the invention will emerge clearly from the ensuing description with reference to the annexed drawings, which are provided purely by way of non-limiting example and in which:
- Figure 1 is an axonometric view of an example of embodiment of the kneading machine described herein;
- Figure 2 is a front view of the machine of Figure 1;
- Figure 3 is a side view of the machine of Figure 1;
- Figure 4 is a top plan view of the machine of Figure 1;
- Figure 5A, 5B, and 5C are schematic illustrations of an operating mode of the machine of Figure 1;
- Figure 6 is an axonometric view of a further example of embodiment of the kneading machine described herein;
- Figures 7A, 7B, and 7C illustrate an operating mode of the machine of Figure 6; and
- Figures 8 illustrates an example of control system of the kneading machine of Figure 1.

In the ensuing description, various specific details are illustrated aimed at enabling an in-depth understanding of the embodiments. The embodiments may be provided without one or more of the specific details, or with other methods, components, or materials, etc. In other cases, known structures, materials, or operations are not illustrated or described in detail so that various aspects of the embodiment will not be obscured.

The references used herein are provided only for convenience and hence do not define the sphere of protection or the scope of the embodiments.

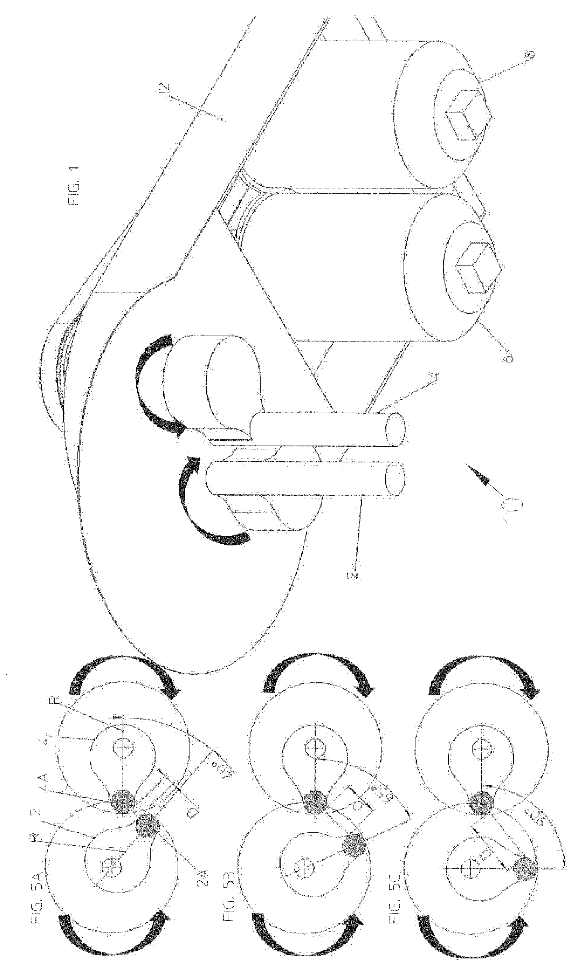

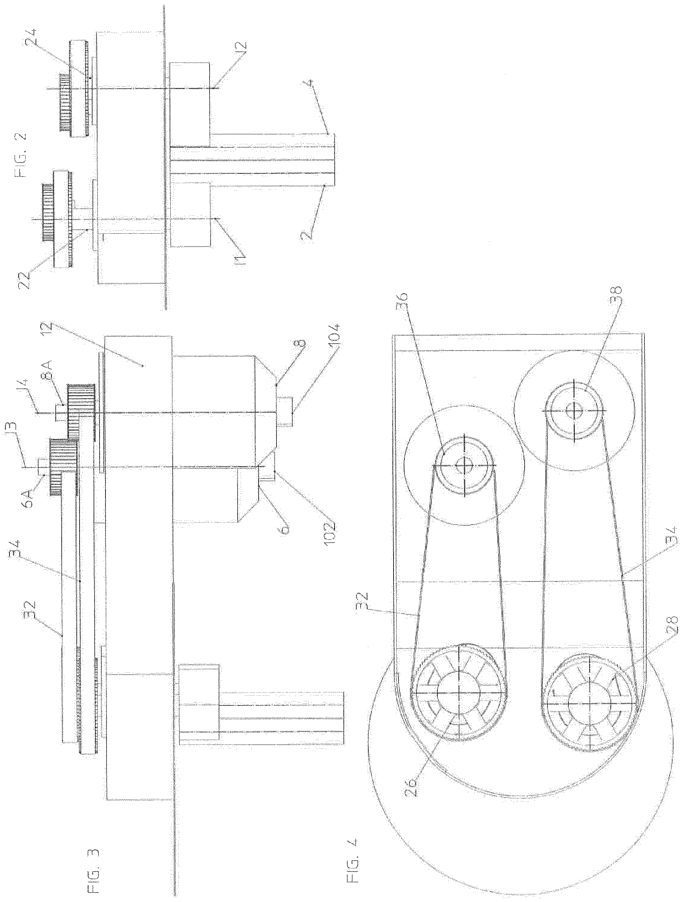

With reference to Figures 1 to 4, the kneading machine described herein, designated as a whole by the reference number 10, comprises two kneading tools 2, 4, which rotate about respective, preferably fixed, axes of rotation I1, 12. The machine described herein may in any case even present a larger number of tools, and the teachings that will be presented hereinafter with reference to the tools 2, 4 may be applied in the same way to all the tools.

In a way in itself known, the two kneading tools 2, 4 are mounted and turn on a top structure 12 of the kneading machine, which extends horizontally, in cantilever fashion, setting the two tools 2, 4 above a region S that is to house a bowl (not illustrated) containing the ingredients for preparation of the dough. Incidentally, it will be noted that the figures illustrate only the top part of the machine 10 for simplicity of representation.

According to an important characteristic of the present invention, the machine 10 comprises two driving units 6, 8, for example two electric motors, which are each prearranged for actuating a respective one of the two tools 2 and 4. The two driving units 6, 8 can be connected to the respective tools 2, 4 in any way known to the person skilled in the sector.

In preferred embodiments, as in the one illustrated, the two motors 6, 8 are mounted on a proximal region of the top structure 12, according to an arrangement such that the axes of rotation 13, I4 of the rotors of the two motors are parallel to one another and to the two axes of rotation I1, I2 of the two kneading tools 2, 4.

The output shafts 6A, 8A of the two motors are connected in rotation to the two tools 2, 4 through a belt-transmission system. In particular, in a way in itself known, the two kneading tools 2, 4 are fixed to the bottom ends of two respective shafts 22, 24, which are rotatably mounted on the structure 12 so as to turn about the two axes of rotation I1, I2. The two shafts 22, 24 have, fitted on them, respective pulleys 26, 28, which are connected via the belts 32, 34 to the pulleys 36, 38, respectively, which are in turn fitted on the shafts 6A, 8A of the two electric motors 6, 8.

It will be noted that the motion-transmission system illustrated is purely provided by way of example and that the kneading machine 10 may envisage also transmission systems of some other type.

For instance, instead of the belt system, it is possible to provide a system of gears.

In further variant embodiments, the two driving units 6, 8 may, instead, be directly connected to the two kneading tools 2, 4; in this case, for example, the two motors 6, 8 are arranged with their own axes of rotation I3, I4 aligned to the two axes of rotation I1, I2 of the two kneading tools.

Once again according to an important characteristic of the present invention, the kneading machine 10 comprises at least two sensors 102, 104, 44 with the function of detecting a datum indicating the velocity and/or position of the two kneading tools 2, 4. The two sensors 102, 104 are, for example, two encoders.

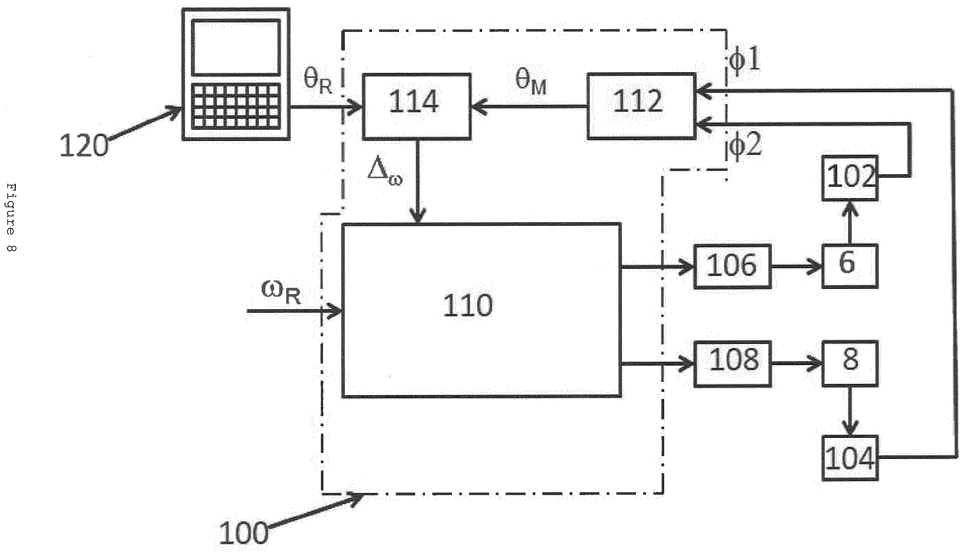

Moreover, the kneading machine 10 comprises a control unit 100 (see Figure 8) configured to control the two driving units 6, 8 so as to operate the two kneading tools 2, 4 for execution of a kneading action.

In this connection, it is in general known that, during operation, the two kneading tools 2, 4 are prearranged for assuming, instant by instant, a respective phase or angular position about the corresponding axes of rotation, creating between them a phase difference necessary for them to carry out an effective kneading action.

In this regard, Figure 5A represents a "snapshot" of the two kneading tools 2, 4 driven in rotation by the motors 6, 8, where the tool 2 is in the angular position of 320°, the tool 4 is in the angular position of 180°, and their phase difference is equal to 40°. As indicated in the figure, these angular values are determined with respect to a reference axis R perpendicular to the axis of rotation of the tool.

The phase difference indicated determines, in the positions reached by the two tools at the instant represented, a minimum distance D respective portions 2A, 4A of the two tools. The condition represented in Figure 5A corresponds to a position in which two corresponding portions (the two portions 2A and 4A in the example illustrated) of the two tools are at a minimum distance from all the other positions assumed by the two tools during their rotation. The portions 2A, 4A are active portions of the tools during kneading of the dough, which are set in corresponding positions along the corresponding axes of rotation I1, I2.

According to an important characteristic of the present invention, the kneading machine 10 is prearranged for adjusting the phase difference between the two kneading tools 2, 4 according to the requirements of the specific applications.

In particular, the control unit 100 is configured to control the two driving unit 6, 8 on the basis of the signals coming from the sensors 102 and 104 so as to operate the two tools 2, 4 according to a reference phase difference.

The reference phase difference can be selected by the operator or else can be determined by the machine on the basis of one or more data inherent in the specific application. In some applications, the phase difference may even be equal to 0°, the two tools being in this case at the minimum distance apart possible (clearly, this is possible when the orbits of rotation of the two tools do not interpenetrate).

In one or more embodiments, the kneading machine may, for example, envisage a user-interface device prearranged for enabling the operator to enter a datum regarding a required phase difference.

In one or more embodiments, the user-interface device is prearranged for entering one or more data regarding:
- the recipe of the dough;
- the degree of refinement of the dough;
- the temperature of the dough; and
- the duration of the kneading operation.

The machine 10 comprises a control unit configured to determine a reference phase difference on the basis of one or more of the aforesaid data.

The kneading machine 10 is moreover prearranged for adjusting the phase difference of the kneading tools 2, 4 during the kneading cycle.

In this regard, the control unit is configured to receive a signal indicating a reference phase difference and to modify the velocity of rotation of at least one of the two tools 2, 4 as a function of the aforesaid signal until a phase difference of the two tools is achieved that corresponds to the reference phase difference.

In one or more embodiments, the user-interface device of the kneading machine 10 is prearranged for enabling application of a required phase difference during the work cycle of the machine.

In one or more embodiments, the machine comprises a memory unit containing a temporal sequence of reference phase differences on the basis of which the control unit 100 carries out control of the driving unit 6, 8 during the work cycle of the machine.

In one or more embodiments, the memory unit comprises a plurality of kneading programmes, each having a time sequence of reference phase differences. A control unit of the machine is configured to select one of the kneading programmes on the basis of one or more data regarding one or more of the following conditions:
- the recipe of the dough;
- the degree of refinement of the dough;
- the temperature of the dough; and
- the duration of the kneading operation.

In accordance with the invention, the kneading machine 10 comprises a sensor designed to detect a parameter indicating the kneading action performed by the two tools 2, 4, and the control unit 100 is configured to modify the velocity of rotation of the two tools 2, 4 as a function of the signal coming from the aforesaid sensor so as to pass from a first reference phase difference to a second reference phase difference between the two kneading tools 2, 4. Said sensor may, for example, be a timer designed to detect a pre-set kneading time.

To return to Figures 5A-5B-5C, these illustrate the two kneading tools 2, 4 in different conditions of mutual phase difference: 40°, 65°, 90°.

It will be noted that corresponding to the above different conditions of phase difference are different values of the distance D between the portions 2A and 4A of the two tools, in particular the increase of the phase difference corresponding to a proportional increase of the distance D.

The person skilled in the sector will understand that the different conditions of phase difference illustrated correspond in effect to different operating conditions of the kneading machine 10, where the two kneading tools 2, 4 are able to exert a more or less intense action on the dough being prepared.

The kneading machine 10 can hence adjust the phase difference between the two tools on the basis of specific requirements of application.

In one or more embodiments, the phase difference between the tools 2, 4 may be determined on the basis of one or more of the following conditions:
- the recipe of the dough (for example, the water content, the characteristics of the flour, etc.);
- the temperature of the dough (for example, the temperature envisaged for the dough at the end of the kneading cycle);
- the duration of the kneading cycle; and
- the degree of refinement envisaged for the dough.

In one or more embodiments, the two kneading tools 2, 4 can operate with a difference in angle that is very small at the start of the kneading cycle and then increases as the gluten is formed in the dough, or, vice versa, the difference in angle can start from a high value and decrease. Experimental tests conducted by the present applicant have shown that this operating mode enables significant reduction in the duration of the kneading cycle.

It will be noted that the operating mode illustrated above can be performed with any type of tools.

In this regard, Figures 1 to 5A-5C illustrate an example of embodiment in which the kneading machine 10 is equipped with two tools having individual rectilinear main portions oriented in a direction parallel to the corresponding axes of rotation.

The two tools 2, 4 have corresponding orbits that interpenetrate and, in the example illustrated, are driven in discordant directions of rotation.

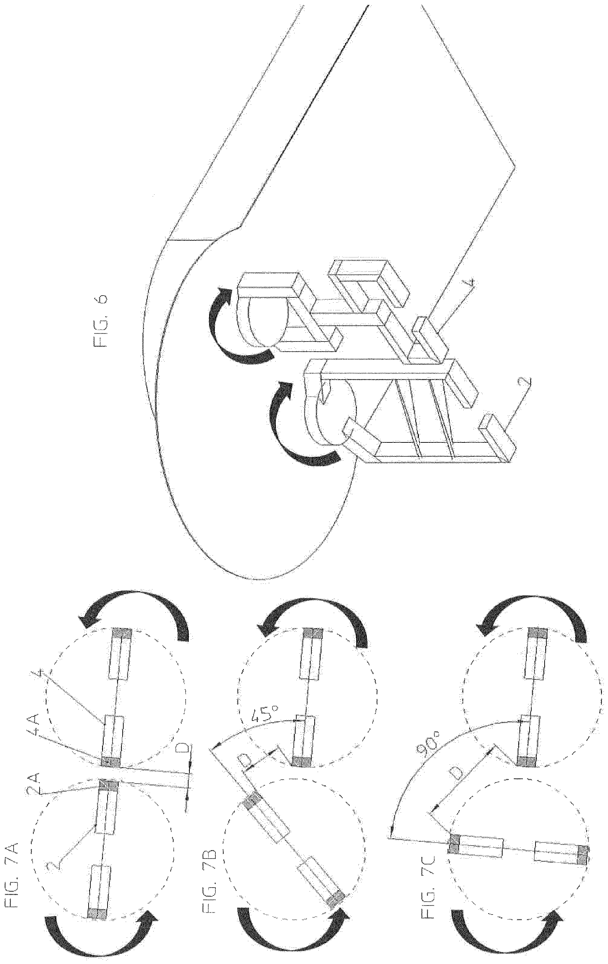

Figure 6 illustrates, instead, a variant in which the two tools 2, 4 have more complex profiles that develop in planes containing the corresponding axes of rotation. In this case, the two tools 2, 4 define orbits that do not interpenetrate, but are set at a distance apart, and are driven in concordant directions of rotation. Furthermore, the two tools 2, 4 are also different from one another.

Like Figures 5A-5C, Figures 7A-7C illustrate the two tools 2, 4 in different conditions of mutual phase difference, 0°, 45°, 90°, corresponding to which are different values of the distance D between the portions 2A and 4A of the two tools.

With reference now to Figure 8, this illustrates an example of control system of the kneading machine 10.

The system illustrated envisages two inverters 106 and 108 for supplying, respectively, the two motors 6, 8, and two encoders 102 and 104 associated, respectively, to the two motors 6, 8 for detecting their velocity of rotation and their positions. The two encoders correspond to the sensors 102, 104 referred to previously.

A control module 110 receives at input a reference velocity ω_{R} and issues to the inverters 106 and 108 signals for actuation of the two motors 6, 8 at a velocity of rotation corresponding to the reference velocity.

The control system further comprises a module 112 prearranged for receiving at input the angular positions φ1,φ2 of the two kneading tools 2, 4 and designed to determine the effective phase difference θ_{M} of the two tools. A further control module 114 receives at input a reference phase difference θ_{R} and the phase difference θ_{M} calculated by the module 112, and is designed to transmit to the control module 110 a command signal Δ_{ω} for a change in peed. The modules 110, 112 and 114 form part of the control unit 100 mentioned above. The reference phase difference θ_{R} may, for example, come from the user-device interface of the machine, designated by the reference 120 in Figure 8, through which the operator has entered a required phase difference.

When at input to the module 114 a reference phase difference θ_{R} is received that differs from the effective phase difference of the two tools, the module 114 transmits to the module 110 a command signal for a change in velocity.

The module 110 carries out an action of control of the velocities of the two kneading tools 2, 4 in such a way that these velocities differ from one another until between the two tools the reference phase difference θ_{R} is obtained, at which point the reference velocity ω_{R} is set for both tools.

For this purpose, the control module 110 can vary the velocity of just one or else both of the tools 2, 4. For instance, the module 110 can accelerate or decelerate one of the two tools or else simultaneously accelerate one and decelerate the other.

In general, the reference phase difference θ_{R} may correspond to the required phase difference or else may be determined by the machine according to the modalities described above.

Of course, without prejudice to the principle of the invention, the details of construction and the embodiments may vary, even significantly, with respect to what has been illustrated herein purely by way of non-limiting example, without thereby departing from the scope of the invention as defined by the annexed claims.

## Claims

1. A kneading machine, comprising:
- a first kneading tool (2) and a second kneading tool (4), which turn about respective axes of rotation (I1, 12); and
- a system for driving said kneading tools (I1, I2) configured to drive said first and second tools according to a given phase difference for execution of a kneading action;
said machine being **characterized in that** it comprises:
- a first driving unit (6) prearranged for driving said first tool (2);
- a second driving unit (8) prearranged for driving said second tool (2);
- a first sensor (102) for detecting a datum indicating the angular position or the velocity of rotation of said first tool (2);
- a second sensor (104) for detecting a datum indicating the angular position or the velocity of rotation of said second tool (4); and
- a control unit (100) configured to control said first and second driving units (6, 8) on the basis of the signals coming from said first and second sensors (102, 104) so as to operate said first and second tools (2, 4) according to a reference phase difference (θ_{R}), wherein said control unit (100) is configured to receive a signal indicating a reference phase difference and to control said first and second motors on the basis of said signal, **characterized in that** said machine comprises a sensor designed to detect a parameter indicating the kneading action exerted by said first and second tools (2, 4), and wherein said control unit (100) is configured to modify the velocity of rotation of said first tool (2) and/or said second tool (4) as a function of a signal coming from said sensor so as to pass from a first reference phase difference to a second reference phase difference.

2. The machine according to Claim 1, wherein said control unit (100) is configured to modify the velocity of rotation of said first tool (2) and/or said second tool (4) as a function of said reference phase difference (θ_{R}).

3. The machine according to Claim 1 or Claim 2, wherein said control unit (100) is configured to modify the velocity of rotation of said first tool (2) and/or said second tool (4) to pass from a first reference phase difference to a second reference phase difference.

4. The machine according to any one of the preceding claims, comprising a user-interface device (120) connected to said control unit (100), through which the operator can enter a datum regarding a required phase difference (θ_{R}).

5. The machine according to any one of the preceding claims, comprising a memory unit containing a series of reference phase differences.

6. The machine according to any one of the preceding claims, comprising a memory unit containing a plurality of kneading programmes, each having a time sequence of reference phase differences.

7. The machine any one of the preceding claims, comprising a user-interface device (120), through which the operator can enter one or more data regarding one or more of the following conditions:
- the recipe of the dough;
- the degree of refinement of the dough;
- the temperature of the dough; and
- the duration of the kneading operation,
said machine being configured to obtain a reference phase difference as a function of said one or more data.

8. A method for preparing a dough via a kneading machine (10) according to any one of the preceding claims, said method comprising the steps of:
- providing a reference phase difference; and
- controlling said first and second driving units (6, 8) on the basis of the signals coming from said first and second sensors (42, 44) so as to operate said first and second tools (2, 4) according to said reference phase difference,
which includes detecting, via sensor means, a variation of the kneading action exerted by said first and second tools (2, 4), and modifying the velocity of rotation of said first tool (2) and/or said second tool (4) so as to pass from a first reference phase difference to a second reference phase difference.

9. The method according to Claim 8, wherein providing said reference phase difference includes inserting in the user-interface device a required phase difference.

10. The method according to Claim 8, wherein providing said pre-set phase difference includes:
- entering in the user-interface device (120) one or more data regarding one or more of the following conditions:
- the recipe of the dough;
- the degree of refinement of the dough;
- the temperature of the dough; and
- the duration of the kneading operation; and
- obtaining a reference phase difference on the basis of said one or more data.

11. The method according to any one of Claims 8 to 10, which includes modifying the velocity of rotation of said first tool (2) and/or said second tool (4) so as to pass from a first reference phase difference to a second reference phase difference.

## Patentansprüche

1. Knetmaschine, umfassend:
- ein erstes Knetwerkzeug (2) und ein zweites Knetwerkzeug (4), die sich um jeweilige Drehachsen (11, 12) drehen; und
- ein System zum Antreiben der Knetwerkzeuge (11, 12), das so konfiguriert ist, dass es erstes und zweites Werkzeug entsprechend einer gegebenen Phasendifferenz zur Ausführung einer Knetaktion antreibt;
wobei die Maschine **dadurch gekennzeichnet ist, dass** sie Folgendes umfasst:
- eine erste Antriebseinheit (6), die für den Antrieb des ersten Werkzeugs (2) vorgesehen ist;
- eine zweite Antriebseinheit (8), die für den Antrieb des zweiten Werkzeugs (2) vorgesehen ist;
- einen ersten Sensor (102) zum Erfassen eines Messwerts, das die Winkelposition oder die Drehgeschwindigkeit des ersten Werkzeugs (2) angibt;
- einen zweiten Sensor (104) zum Erfassen eines Messwerts, das die Winkelposition oder die Drehgeschwindigkeit des zweiten Werkzeugs (4) angibt; und
- eine Steuereinheit (100), die so konfiguriert ist, dass sie die erste und zweite Antriebseinheit (6, 8) auf der Grundlage der Signale steuert, die von dem ersten und zweiten Sensor (102, 104) kommen, um das erste und zweite Werkzeug (2, 4) entsprechend einer Referenzphasendifferenz (θ_{R}) zu bedienen, wobei die Steuereinheit (100) so konfiguriert ist, dass sie ein Signal empfängt, welches eine Referenzphasendifferenz angibt, und den ersten und zweiten Motor auf der Grundlage des Signals steuert, **dadurch gekennzeichnet, dass** die Maschine einen Sensor umfasst, der dazu dient, einen Parameter zu erfassen, der die Knetaktion anzeigt, die von dem ersten und zweiten Werkzeug (2, 4) ausgeführt wird, und wobei die Steuereinheit (100) so konfiguriert ist, dass sie die Drehgeschwindigkeit des ersten Werkzeugs (2) und/oder des zweiten Werkzeugs (4) als eine Funktion eines Signals modifiziert, das vom Sensor kommt, um von einer ersten Referenzphasendifferenz zu einer zweiten Referenzphasendifferenz überzugehen.

2. Maschine nach Anspruch 1, wobei die Steuereinheit (100) so konfiguriert ist, dass sie die Drehgeschwindigkeit des ersten Werkzeugs (2) und/oder des zweiten Werkzeugs (4) als eine Funktion der Referenzphasendifferenz (θ_{R})modifiziert.

3. Maschine nach Anspruch 1 oder Anspruch 2, wobei die Steuereinheit (100) so konfiguriert ist, dass sie die Drehgeschwindigkeit des ersten Werkzeugs (2) und/oder des zweiten Werkzeugs (4) modifiziert, um von einer ersten Referenzphasendifferenz zu einer zweiten Referenzphasendifferenz überzugehen.

4. Maschine nach einem der vorhergehenden Ansprüche, umfassend eine Benutzerschnittstellenvorrichtung (120), die an die Steuereinheit (100) angeschlossen ist, durch die der Benutzer ein Datenelement bezüglich einer erforderlichen Phasendifferenz (θ_{R})eingeben kann.

5. Maschine nach einem der vorstehenden Ansprüche, umfassend eine Speichereinheit, die eine Reihe von Referenzphasendifferenzen enthält.

6. Maschine nach einem der vorstehenden Ansprüche, umfassend eine Speichereinheit, die eine Vielzahl von Knetprogrammen enthält, von denen jedes eine zeitliche Abfolge von Referenzphasendifferenzen aufweist.

7. Maschine nach einem der vorstehenden Ansprüche, umfassend eine Benutzerschnittstellenvorrichtung (120) durch die der Benutzer ein oder mehrere Daten eingeben kann, die eine oder mehrere der folgenden Bedingungen betreffen:
- das Rezept des Teigs;
- der Verfeinerungsgrad des Teigs;
- die Temperatur des Teigs und
- die Dauer des Knetvorgangs,
wobei die Maschine so konfiguriert ist, dass sie eine Referenzphasendifferenz als eine Funktion von dem einen oder den mehreren Daten erhält.

8. Verfahren für die Herstellung eines Teigs über eine Knetmaschine (10) nach einem der vorstehenden Ansprüche, wobei das Verfahren die folgenden Schritte umfasst:
- Bereitstellen einer Referenzphasendifferenz und
- Steuern der ersten und zweiten Antriebseinheit (6, 8) auf der Grundlage der Signale, die von dem ersten und zweiten Sensor (42, 44) kommen, um das erste und zweite Werkzeug (2, 4) entsprechend der Referenzphasendifferenz zu bedienen,
was das Erfassen einer Veränderung der vom ersten Werkzeug und zweiten Werkzeug (2, 4) ausgeübten Knetaktion über Sensormittel und das Modifizieren der Drehgeschwindigkeit des ersten Werkzeugs (2) und/oder des zweiten Werkzeugs (4) umfasst, um von einer ersten Referenzphasendifferenz zu einer zweiten Referenzphasendifferenz überzugehen.

9. Verfahren nach Anspruch 8, wobei das Bereitstellen der Referenzphasendifferenz das Eingeben einer erforderlichen Phasendifferenz in die Benutzerschnittstellenvorrichtung enthält.

10. Verfahren nach Anspruch 8, wobei das Bereitstellen der vorgegebenen Phasendifferenz Folgendes enthält:
- Eingeben von einem oder mehreren Daten in die Benutzerschnittstellenvorrichtung (120), die eine oder mehrere der folgenden Bedingungen betreffen:
- das Rezept des Teigs;
- den Verfeinerungsgrad des Teigs;
- die Temperatur des Teigs und
- die Dauer des Knetvorgangs; und
- Erhalten einer Referenzphasendifferenz auf der Grundlage des einen oder der mehreren Daten.

11. Verfahren nach einem der Ansprüche 8 bis 10, das Modifizieren der Drehgeschwindigkeit des ersten Werkzeugs (2) und/oder des zweiten Werkzeugs (4) enthält, um von einer ersten Referenzphasendifferenz zu einer zweiten Referenzphasendifferenz überzugehen.

## Revendications

1. Machine à pétrir comprenant :
- un premier outil de pétrissage (2) et un second outil de pétrissage (4), qui tournent autour d'axes de rotation (I1, 12) respectifs ; et
- un système pour entraîner lesdits outils de pétrissage (I1, 12) configuré pour entraîner lesdits premier et second outils selon une différence de phase donnée pour l'exécution d'une action de pétrissage ;
ladite machine étant **caractérisée en ce qu'**elle comprend :
- une première unité d'entraînement (6) pré-agencée pour entraîner ledit premier outil (2) ;
- une seconde unité d'entraînement (8) pré-agencée pour entraîner ledit second outil (2) ;
- un premier capteur (102) pour détecter une donnée indiquant la position angulaire ou la vitesse de rotation dudit premier outil (2) ;
- un second capteur (104) pour détecter une donnée indiquant la position angulaire ou la vitesse de rotation dudit second outil (4) ; et
- une unité de commande (100) configurée pour commander lesdites première et seconde unités d'entraînement (6, 8) sur la base des signaux provenant desdits premier et second capteurs (102, 104) afin d'actionner lesdits premier et second outils (2, 4) selon une différence de phase de référence (θ_{R}), dans laquelle ladite unité de commande (100) est configurée pour recevoir un signal indiquant une différence de phase de référence et pour commander lesdits premier et second moteurs sur la base dudit signal, **caractérisée en ce que** ladite machine comprend un capteur conçu pour détecter un paramètre indiquant l'action de pétrissage exercée par lesdits premier et second outils (2, 4), et dans laquelle ladite unité de commande (100) est configurée pour modifier la vitesse de rotation dudit premier outil (2) et/ou dudit second outil (4) en fonction d'un signal provenant dudit capteur afin de passer d'une première différence de phase de référence à une seconde différence de phase de référence.

2. Machine selon la revendication 1, dans laquelle ladite unité de commande (100) est configurée pour modifier la vitesse de rotation dudit premier outil (2) et/ou dudit second outil (4) en fonction de ladite différence de phase de référence (θ_{R}).

3. Machine selon la revendication 1 ou la revendication 2, dans laquelle ladite unité de commande (100) est configurée pour modifier la vitesse de rotation dudit premier outil (2) et/ou dudit second outil (4) pour passer d'une première différence de phase de référence à une seconde différence de phase de référence.

4. Machine selon l'une quelconque des revendications précédentes, comprenant un dispositif d'interface utilisateur (120) raccordé à ladite unité de commande (100), par le biais de laquelle l'opérateur peut entrer une donnée concernant une différence de phase (θ_{R}) requise.

5. Machine selon l'une quelconque des revendications précédentes, comprenant une unité de mémoire contenant une série de différences de phase de référence.

6. Machine selon l'une quelconque des revendications précédentes, comprenant une unité de mémoire contenant une pluralité de programmes de pétrissage, ayant chacun une séquence de temps de différences de phase de référence.

7. Machine selon l'une quelconque des revendications précédentes, comprenant un dispositif d'interface utilisateur (120), par le biais duquel l'opérateur peut entrer une ou plusieurs données concernant une ou plusieurs des conditions suivantes :
- la recette de la pâte ;
- le degré de raffinage de la pâte ;
- la température de la pâte ; et
- la durée de l'opération de pétrissage,
ladite machine étant configurée pour obtenir une différence de phase de référence en fonction desdites une ou plusieurs données.

8. Procédé de préparation d'une pâte via une machine à pétrir (10) selon l'une quelconque des revendications précédentes, ledit procédé comprenant les faits de :
- fournir une différence de phase de référence ; et
- commander lesdites première et seconde unités d'entraînement (6, 8) sur la base des signaux provenant desdits premier et second capteurs (42, 44) afin d'actionner lesdits premier et seconds outils (2, 4) selon ladite différence de phase de référence,
qui comprend la détection, via un moyen de capteur, d'une variation de l'action de pétrissage exercée par lesdits premier et second outils (2, 4), et la modification de la vitesse de rotation dudit premier outil (2) et/ou dudit second outil (4) afin de passer d'une première différence de phase de référence à une seconde différence de phase de référence.

9. Procédé selon la revendication 8, dans lequel la fourniture de ladite différence de phase de référence comprend l'insertion dans le dispositif d'interface utilisateur, d'une différence de phase requise.

10. Procédé selon la revendication 8, dans lequel la fourniture de ladite différence de phase préréglée comprend :
- l'entrée dans le dispositif d'interface utilisateur (120), d'une ou de plusieurs données concernant une ou plusieurs des conditions suivantes :
- la recette de la pâte ;
- le degré de raffinage de la pâte ;
- la température de la pâte ; et
- la durée de l'opération de pétrissage ; et
- l'obtention d'une différence de phase de référence sur la base desdites une ou plusieurs données.

11. Procédé selon l'une quelconque des revendications 8 à 10, qui comprend la modification de la vitesse de rotation dudit premier outil (2) et/ou dudit second outil (4) afin de passer d'une première différence de phase de référence à une seconde différence de phase de référence.
